# EUROPÄISCHE PATENTSCHRIFT

(11) **EP 1 466 786 B1**
(45) Veröffentlichungstag und Bekanntmachung des Hinweises auf die Patenterteilung: **28.12.2005**
(21) Anmeldenummer: 03022622.9
(22) Anmeldetag: 06.10.2003
(51) Int. Cl.: B60R 9/058

(54) **Dachlastenträger für Kraftfahrzeuge**
Roof carrier for vehicle
Galerie pour véhicule

(30) Priorität: 07.04.2003 DE 10315778
(43) Veröffentlichungstag der Anmeldung: 13.10.2004
(73) Patentinhaber: Mont Blanc Industri AB, 516 90 Dalsjöfors (SE)
(72) Erfinder: Eugler, Norbert, 85757 Karlsfeld (DE)
(74) Vertreter: Zmyj, Erwin

(56) Entgegenhaltungen:
- EP-A- 0 151 907
- EP-A- 0 273 480
- US-A- 4 684 049
- US-A- 5 397 042

## Beschreibung

Die Erfindung bezieht sich auf einen Dachlastenträger für Kraftfahrzeuge mit mindestens einem Tragholm, der mittels zweier das Kraftfahrzeugdach in seinem Randbereich umgreifende Spannelemente spannzangenartig befestigt ist, wobei zumindest ein Spannelement gegenüber dem Tragholm beweglich und durch eine spannende Betätigungsvorrichtung gegen das Kraftfahrzeugdach spannbar ist, wobei die beiden Spannelemente über ein Zugglied miteinander in Wirkverbindung stehen, wobei die Betätigungsvorrichtung einerseits direkt mit dem beweglichen Spannelement und andererseits über ein Hebelgetriebe mit dem Zugglied zusammenwirkt und wobei das Hebelgetriebe einen schwenkbar am Tragholm gelagerten Spannhebel aufweist, an dem das Zugglied mit Abstand zur Schwenkachse des Spannhebels angreift.

Ein Dachlastenträger dieser Art ist aus der gattungsbildenden EP-A-0 273 480 bekannt. Das Spannelement ist bei diesem bekannten Dachlastenträger als Seil ausgebildet, welches an einem Spannhebel angreift, an dem auch die spannende Betätigungsvorrichtung angelenkt ist. Nur bei einer Ausführungsform dieses bekannten Dachlastenträgers ist eine Spannkraftausübung in Richtung des Zugseiles, also ohne Kraftverstärkung, möglich, während bei den übrigen Ausführungsformen das Spannseil am längeren Hebel als die Betätigungsvorrichtung angreift, so dass keine Verstärkung der Zugkraft auf die Spannelemente eintritt.

Aus der US-A-5,397,042 ist ebenfalls ein Dachlastenträger bekannt, bei welchem ein Hebelgetriebe zur Anwendung kommt, bei welchem parallelogrammartig angeordnete Hebel zur Anwendung kommen, die dazu dienen, die durch die Betätigungsvorrichtung eingeleitete Spannkraft in eine in Richtung des Tragholmes wirkende Kraft und eine in Richtung senkrecht hierzu wirkende Kraft aufzuteilen, wobei die in horizontaler Richtung, das heißt in Richtung des Tragholmes wirkende Kraft, größer sein soll als die senkrecht hierzu wirkende Kraft, welche den Stützfuß gegen das Dach drückt. Es findet also eine Parallelverschiebung des Tragholmes zusammen mit dem Stützfuß gegenüber dem Dach statt, um den Stützfuß stärker gegen das Dach zu pressen. Eine Übersetzung der durch die Betätigungsvorrichtung eingeleiteten Kraft, in dem Sinne, dass weniger Kraft beim Betätigungselement aufgebracht werden muss als tatsächlich an der Spannkralle wirkt, ist nicht vorgesehen.

Bei einem Dachlastenträger gemäß der US-A-4,664,049 ist ein Spannband auf eine Trommel aufgewickelt, welches über eine Art Schlitten auf das, das Dach umfassende, Spannelement einwirkt. Eine Hebelübersetzung im Sinne einer Spannkraftverstärkung ist hier nicht vorgesehen.

Bei einem Dachlastenträger nach der EP-A-0 151 907 ist eine Spannvorrichtung in Form eines Gewindebolzens vorgesehen, der auf ein Zugglied einwirkt, das mit dem Spannelement verbunden ist. Auch hier findet keine Kraftübersetzung statt.

Aufgabe der Erfindung ist es, einen Dachlastenträger nach dem Oberbegriff des Anspruchs 1 so weiter zu bilden, dass das Design dieses Trägers verbessert, die zusätzlichen Windgeräusche vermieden werden und trotzdem eine ausreichende Zugkraft auf die Spannelemente ausgeübt werden kann.

Diese Aufgabe wird erfindungsgemäß durch einen Dachlastenträgen mit den Merkmalen des Anspruchs 1 gelöst.

Hierdurch ist in besonders einfacher konstruktiver Weise ein Hebelgetriebe geschaffen, dass sich im Bereich des Spannelementes bzw. Stützelementes für den Tragholm anordnen lässt, so dass auf einfache Weise die durch die Lagerung des Zuggliedes in einen oberen Bereich notwendigen hohen Zugkräfte im Zugglied aufgebracht werden können, ohne dass große Krafteinwirkungen auf die Betätigungsvorrichtung notwendig wären.

Bei dem eingangs erläuterten Stand der Technik nach der EP-A-0 273 480 ist das Zugglied unterhalb des Tragholmes vorgesehen und somit der Luftströmung ausgesetzt. Hierdurch werden sehr große Windgeräusche erzeugt. Um diese zu vermeiden ist in der Erfindung vorgesehen, dass das Zugglied gegen ein Windgeräusche erzeugendes Umströmen durch den Fahrwind durch den Tragholm geschützt ist.

Wenn in weiterer vorteilhafter Ausgestaltung der Erfindung der Spannhebel gleichzeitig als Stützfuß für den Tragholm dient, so wird auf eine andere Art und Weise die Konstruktion vereinfacht, da bei der vorhergehenden Ausführungsform das Spannelement den Stützfuß bildete während bei der jetzt dargelegten Ausführungsform der Spannhebel den Stützfuß bildet, so dass hier eine weitere vorteilhafte Ausgestaltung ermöglicht wird, die darin besteht, dass das Spannelement an seinem oberen Ende lose am Tragholm anliegt, als Hohlprofil ausgebildet ist und zumindest teilweise den als Stützfuß dienenden Spannhebel aufnimmt. Hierdurch hat das Spannelement aufgrund der Tatsache, dass es nicht mehr Stützfuß ist, eine größere Bewegungsfreiheit gegenüber dem Stützfuß, so dass sich diese Ausgestaltung für solche Dachformen besonders eigenen, bei dessen beim Anbringen des Dachlastenträgers eine größere Bewegungsfreiheit des Spannelementes erforderlich ist. Mit dem am oberen Ende lose am Tragholm anliegenden Spannelement ist praktisch ein spaltloser Übergang zwischen Tragholm und Spannelement geschaffen, wodurch wegen der fließenden Übergänge von Tragholm und Spannelement nicht nur eine optische schönere Wirkung erzielt wird, sondern es werden auch mögliche Windgeräusche vermieden.

### Fortsetzung auf Seite 4 der ursprünglichen Beschreibung!

Um einen besonderes guten Formschluss zwischen Kraftfahrzeugdach und Spannelement herbeizuführen, ist in vorteilhafter Weise vorgesehen, dass das Spannelement an seinem freien unteren Ende eine das seitliche Kraftfahrzeugdach umgreifende Spannkralle aufweist. Diese Spannkralle kann der Dachform so angepasst werden, dass sich diese Spannkralle an das äußere durch den Dachholm bedingte Profil anschmiegen kann und dieses formschlüssig umgreift.

Um eine besondere Schonung der Lackierung des Kraftfahrzeugdaches zu gewährleisten, ist am Stützfuß ein Auflagekissen zur Abstützung auf dem Kraftfahrzeug angeordnet.

Eine besonders einfache Konstruktion ergibt sich, wenn in weiterer Ausgestaltung der Erfindung jedes Spannelement zur Aufnahme von Dachlasten formschlüssig mit dem Kraftfahrzeugdach oder daran befestigten Teil zusammenwirkt. Durch diese Ausgestaltung übernimmt jedes Spannelement nicht nur die bestimmungsgemäße Spannfunktion, sondern auch die Tragfunktion für die Dachlasten. Bei dieser Ausgestaltung gibt es keine Berührung zwischen einem Stützfuß und der außensichtbaren Dachhaut sondern dieser formschlüssige Eingriff kann in einen Bereich verlegt werden, der durch die Türdichtung überdeckt ist.

Wenn in weiterer Ausgestaltung der Erfindung die Schwenkachse des Spannelements gleichzeitig als Schwenkachse für den Spannhebel dient, der innerhalb eines, als Hohlprofil ausgebildeten Spannelementes, aufgenommen ist, so ist hierdurch nicht nur die Konstruktion vereinfacht, sondern das Übersetzungsgetriebe ist durch das Spannelement in optisch gefälliger Weise abgedeckt und somit verkleidet.

Eine einfache Ausgestaltung der Spannvorrichtung für den Dachlastenträger ergibt sich dadurch, dass die Spannvorrichtung als eine Spannschraube ausgebildet ist, die in ein Gewinde des Spannhebels einschraubbar ist und sich mit einem Schraubenkopf am Spannelement abstützt. Durch die Verwendung eines Übersetzungsgetriebes kann an dieser Spannschraube bei einem verhältnismäßig geringen Drehmoment eine hohe Zugkraft im Zugglied und damit eine ausreichende Spannkraft an den Spannelementen erzeugt werden.

Grundsätzlich ist es notwendig, dass zumindest ein Stützfuß bzw. ein formschlüssig mit dem Kraftfahrzeugdach zusammenwirkendes Spannelement schwenkbar am Tragholm angeordnet ist, wenn aber an den beiden Enden schwenkbare Stützfüße oder schwenkbare Spannelemente vorgesehen werden, so empfiehlt es sich, dass die Ausbildung und Anordnung von Stützfuß, Spannelement, Spannhebel und Spannvorrichtung an jedem Ende des Tragholms der Ausbildung und Anordnung nach einem der Ansprüche 1 bis 11 entsprechen. Hierdurch ist eine symmetrische Ausgestaltung an beiden Enden des Tragholmes gewährleistet, was nicht nur optische Vorteile, sondern auch Vorteile hinsichtlich der Fertigung und Lagerhaltung bietet.

Wenn eine schwenkbare Anordnung von den Stützfüßen oder Spannelementen an beiden Enden des Tragholmes vorgesehen ist, so kann es bei einem Angriff von Kräften in Richtung des Tragholmes zu einer parallelogrammartigen Verschiebung des Tragholmes kommen. Um einen solchen Zustand zu vermeiden, ist in weiterer Ausgestaltung der Erfindung vorgesehen, dass das Zugglied am Tragholm blockierbar ist.

Zur Vermeidung von Windgeräuschen und Verbesserung des Designs werden verschiedene Möglichkeiten vorgeschlagen. Eine erste bevorzugte Ausgestaltungsmöglichkeit besteht darin, dass das Zugglied innerhalb des als Hohlprofil ausgebildeten Tragholmes angeordnet ist. Bei dieser Ausgestaltung sind mit Sicherheit Windgeräusche vermieden, die durch das Zugglied ausgelöst werden könnten.

Eine weitere vorteilhafte Ausgestaltung besteht darin, dass das Zugglied in einer Aussparung des Tragholmes aufgenommen ist. Auch bei dieser Ausführungsform ist das Zugglied von außen praktisch nicht sichtbar, wenn die Aussparung an der Unterseite des Tragholmes vorgesehen ist und das Zugglied bündig mit der Unterkante des Tragholmes abschließt.

Weiterhin kann es vorteilhaft sein, wenn das Zugglied gegen den Fahrtwind durch Profilvorsprünge des Tragholmes geschützt ist. Dabei ist das Zugglied zwischen zwei Profilvorsprünge aufzunehmen, die zumindest zur Fahrtwindseite hin einen sanften Übergang und damit eine strömungsgünstige Gestalt aufweisen.

Es ist aber auch möglich, dass das Zugglied an der Außenseite des Tragholmes in einer gegen den Fahrtwind zumindest teilweise geschützten Lage angeordnet ist. Eine solche Ausgestaltung sieht insbesondere vor, dass das Zugglied an der Unterseite des Tragholmes angeordnet ist und in gewisser Weise im Windschatten der vorderen Unterkante des Tragholmes liegt. Hierbei ist es besonders zweckmäßig, wenn das Zugglied eine strömungsgünstige Form aufweist.

Die Anordnung eines Zuggliedes dient nicht nur der spannzangenartigen Befestigung der Spannelemente am Kraftfahrzeugdach, sondern dieses Zugglied bildet auch einen Untergurt bezogen auf den Tragholm, so dass trotz großer Spannkräfte für die spannzangenartige Befestigung und auch bei größeren Traglasten einer Verformung des Tragholmes durch dieses Zugglied entgegengewirkt wird, so dass der Tragholm nicht so stabil ausgeführt werden muss, als wenn kein Zugglied und somit kein Untergurt vorhanden wäre. Der Begriff Untergurt wird hier in Anlehnung an den Brückenbau verwendet, wo zur Vermeidung einer Durchbiegung des oberen Brückenteiles Untergurte mit entsprechendem Abstand zu diesem oberen Brückenteil, welches mit dem Tragholm vergleichbar ist, geordnet werden.

Die Erfindung wird nachfolgend anhand verschiedener Ausführungsbeispiele näher erläutert. In der Zeichnung zeigen:
- **Fig. 1:**: ein erstes Ausführungsbeispiel eines Dachlastenträgers mit zwei schwenkbaren Stützfüßen;
- **Fig. 2**:: einen Dachlastenträger entsprechend Fig. 1 mit einer Zusatzeinrichtung;
- **Fig. 3:**: einen Dachlastenträger mit nur einem schwenkbaren Stützfuß;
- **Fig. 4:**: ein weiteres Ausführungsbeispiel eines Dachlastenträgers;
- **Fig. 5 a-d:**: verschiedene Querschnittsprofilausgestaltungen und Zuggliedanordnungen;
- **Fig. 6:**: eine schaubildliche Darstellung eines formschlüssig mit dem Kraftfahrzeugdach zusammenwirkenden Spannelement; und
- **Fig. 7:**: eine weitere Ausführungsform der formschlüssigen Verbindung zwischen Spannelement und Kraftfahrzeugdach.

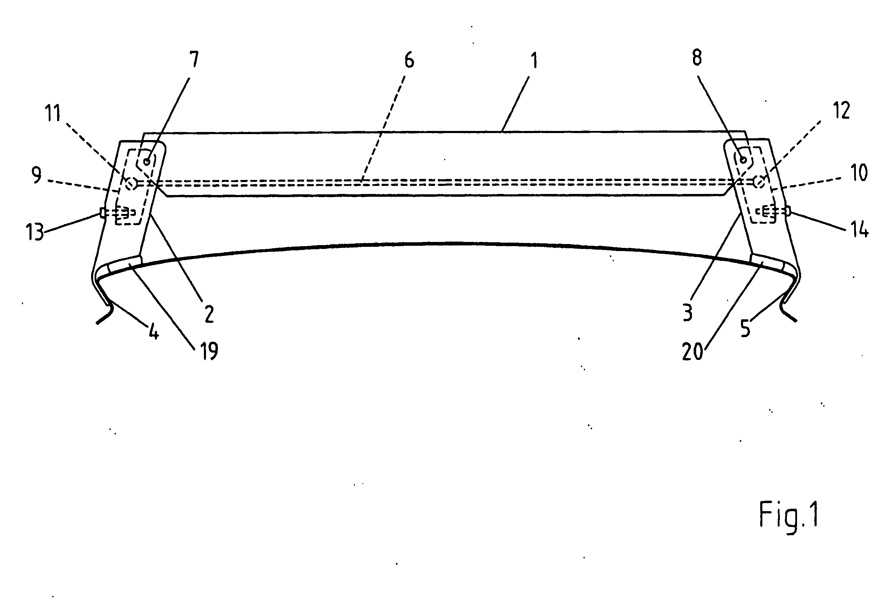

Die in den Figuren 1 bis 3 dargestellten Dachlastenträger umfassen einen Tragholm 1 und 2, mit 30 und 31 bezeichnete Spannelemente, die einstückig jeweils einen Stützfuß 2 mit Auflagekissen 19, einen Stützfuß 3 mit Auflagekissen 20 und Spannkrallen 4 und 5 umfassen. Weiterhin ist ein Zugglied 6 innerhalb des als Hohlprofil ausgebildeten Tragholms 1 angeordnet, welches an Gelenkpunkten 11 und 12 mit Spannhebeln 9 und 10 zusammenwirkt, die um Schwenkachsen 7 und 8 schwenkbar gelagert sind, um die auch die Spannelemente 30 und 31 schwenkbar gelagert sind. Die Spannelemente 30 und 31 dienen somit zur Aufnahme der Dachlast und Übertragung derselben auf das Kraftfahrzeugdach, da die als Stützfüße bezeichneten Teile 2 und 3 mit Auflagekissen 19 und 20 auf dem Dach aufliegen. Weiterhin dienen die Spannelemente zur spannzangenartigen Umfassung des Kraftfahrzeugdaches wofür die Spannkrallen 4 und 5 vorgesehen sind.

An jedem Spannelement 30 bzw. 31 greift eine Spannvorrichtung 13 bzw. 14 in Form einer Spannschraube an, die jeweils in ein Gewinde 9' bzw. 10' der Spannhebel 9 bzw. 10 eingreift und somit mit diesen Spannhebeln zusammenwirkt. Mit den jeweiligen Schraubenköpfen 13' bzw. 14' wirkt die Spannschraube mit dem Spannelement 30 bzw. 31 zusammen, so dass das Zugglied 6 über die Spannhebel 9 und 10 mit den Spannelementen in Wirkverbindung steht.

Der Angriffspunkt der Spannvorrichtungen 13 und 14 an den jeweiligen Spannhebeln 9 und 10 weist zur jeweiligen Schwenkachse 7 bzw. 8 einen größeren Abstand auf, als dies dem Abstand der Gelenkverbindungen 11 und 12 zur jeweiligen Schwenkachse 7 und 8 entspricht, so dass hierdurch ein Übersetzungsgetriebe in Form eines Hebelgetriebes geschaffen ist. Wenn also beispielsweise der Abstand der Spannvorrichtung 13 von der Schwenkachse 7 doppelt so groß wie der Abstand der Gelenkverbindung 11 zur Schwenkachse 7 ist, so ist die Krafteinwirkung, die durch die Spannvorrichtung 13 ausgeübt wird nur halb so groß wie die sich über das Zugglied 6 auf den Spannhebel 9 auswirkende Zugkraft. Die Spannelemente 30 und 31 werden also durch Betätigung der Spannvorrichtungen 13 und 14 gegen ein in der Zeichnung schematisch dargestelltes Kraftfahrzeugdach 29 gespannt, wobei trotz hoher Zugkräfte im Zugglied 6 an den jeweiligen Spannvorrichtungen 13 und 14 verhältnismäßig geringe Drehmomente zur Erzeugung von Spannkräften aufgebracht werden müssen.

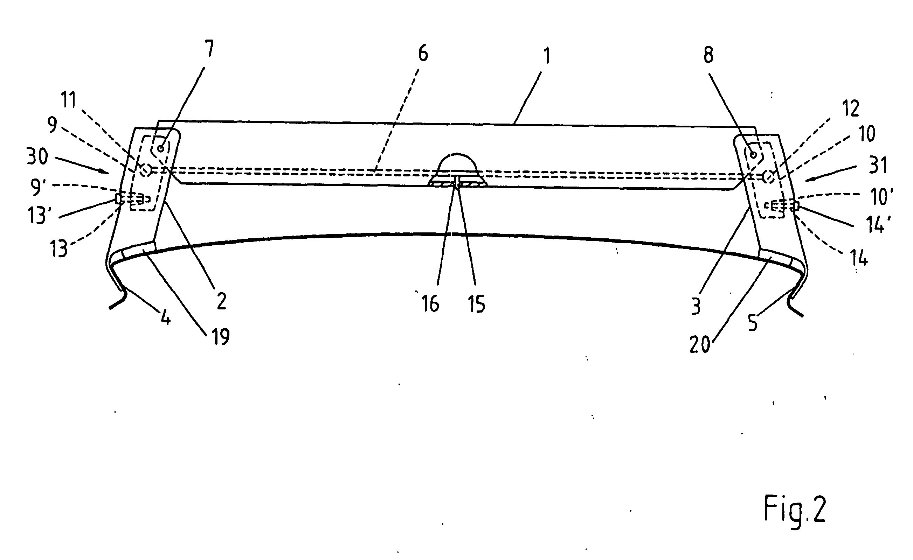

Die beiden Ausführungsformen nach den Figuren 1 und 2 weisen nur einen Unterschied auf, der darin besteht, dass das Zugglied 6 gegenüber dem Tragholm 1 blockiert.

Hierfür ist an dem Zugglied 6 ein Zapfen 15 befestigt, der in eine Bohrung 16 des Tragholmes 1 eingreift, so dass eine Verschiebung des Zuggliedes gegenüber dem Tragholm nicht mehr eintreten kann. Diese Blockierung ist vorgesehen, um eine parallelogrammartige Verschiebung des Tragholmes quer zur Fahrzeuglängsachse zu vermeiden, wenn Kräfte auftreten, die in Richtung des Tragholmes wirken.

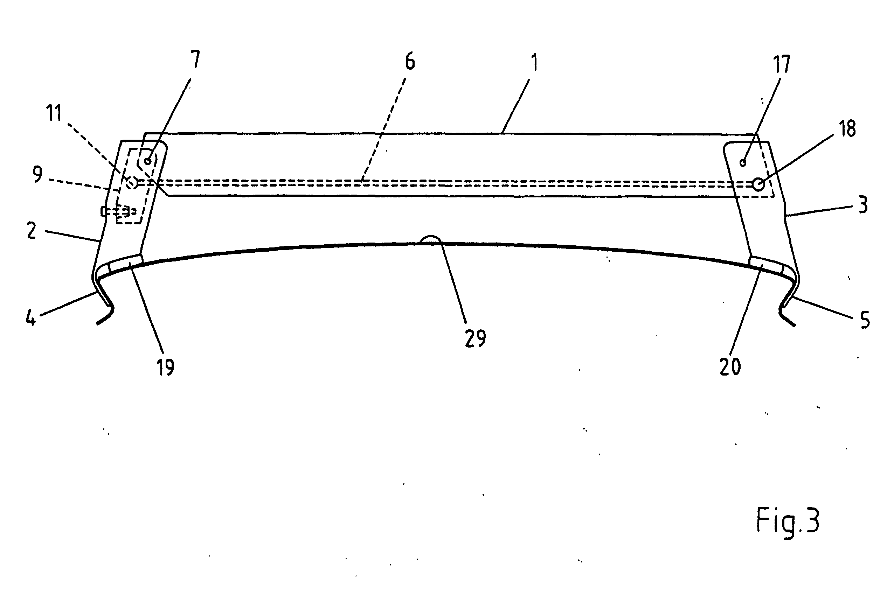

Bei der Ausführungsform nach Fig. 3 ist ein Dachlastenträger dargestellt, der an seinem linken Ende eine Ausgestaltung entsprechend den Dachlastenträgern gemäß den Fig. 1 und 2 aufweist. Am rechten Ende ist eine Abweichung vorgesehen die darin besteht, dass das Spannelement 31 mittels einer Nietverbindung 17 einen Festpunkt aufweist und mittels einer weiteren Nietverbindung 18 die einen Festpunkt bildet, fest mit dem Tragholm 1 verbunden ist. Dabei ersetzt der Festpunkt 17 die Schwenkachse 8 nach Fig. 1 und der Festpunkt 18 ersetzt die Gelenkverbindung 12 nach Fig. 1. Da diese Nietverbindung bzw. Festpunkt 18 gleichzeitig auch das Zugglied 6 festlegt, ist das Zugglied arretiert, da es gleichgültig ist, ob eine Arretierung entsprechend dem Zapfen 15 bei Fig. 2 in der Mitte des Zuggliedes vorgesehen ist oder ob die Arretierung am Ende des Zuggliedes erfolgt, wie es bei Fig. 3 der Fall ist.

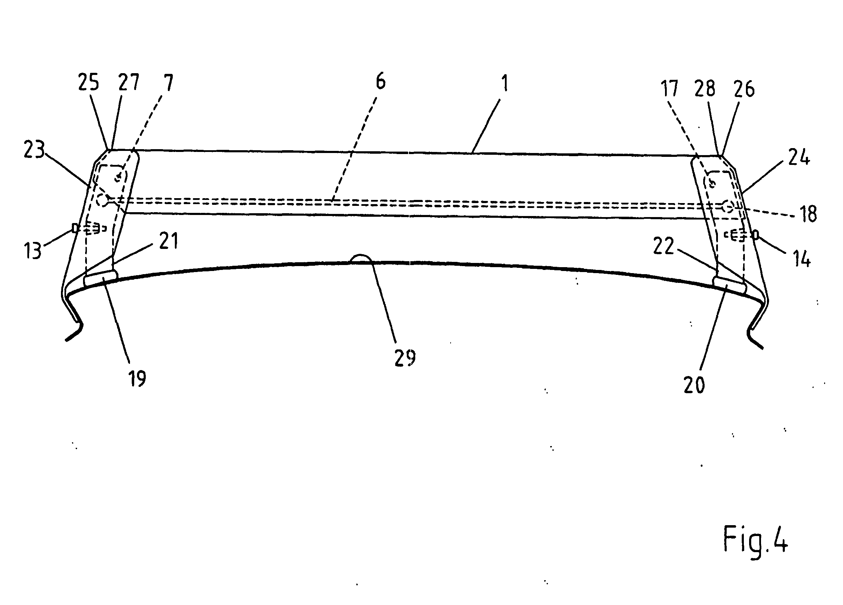

Bei der Ausführungsform nach Fig. 4 ist eine grundsätzliche Änderung vorgenommen worden die darin besteht, dass die Spannhebel 21 und 22 als Stützfüße dienen, die mit den Auflagepolstern 19 und 20 versehen sind. Bei dieser Ausführungsform sind die Spannelemente als Profilkappen 23 und 24 ausgebildet, die an ihren oberen Enden 25 und 26 an den obersten Enden 27 und 28 des Tragholmes 1 anliegen. Bei dieser Ausführungsform ist der linke Stützfuß bzw. Spannhebel 21 um eine Schwenkachse 7 schwenkbar, während der rechte Stützfuß bzw. Spannhebel 22 mittels Festpunkten 17 und 18 fest ist, wobei der Festpunkt 18 gleichzeitig auch das Zugglied 6 arretiert. Mittels der Spannvorrichtungen 13 und 14 werden die Spannelemente 23 und 24 gegen ein Dach eines Kraftfahrzeuges gespannt, welche in Fig. 4 mit 29 bezeichnet ist.

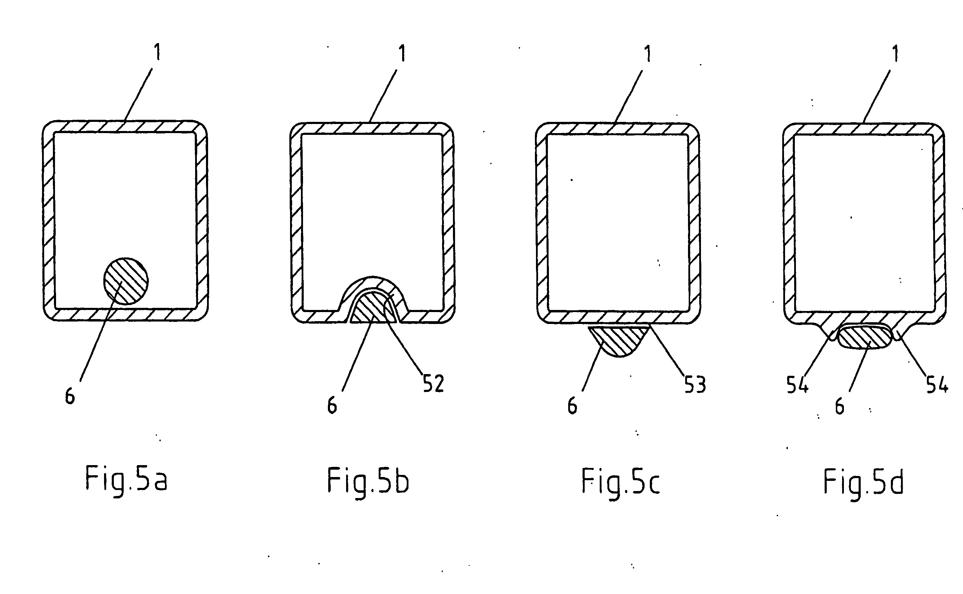

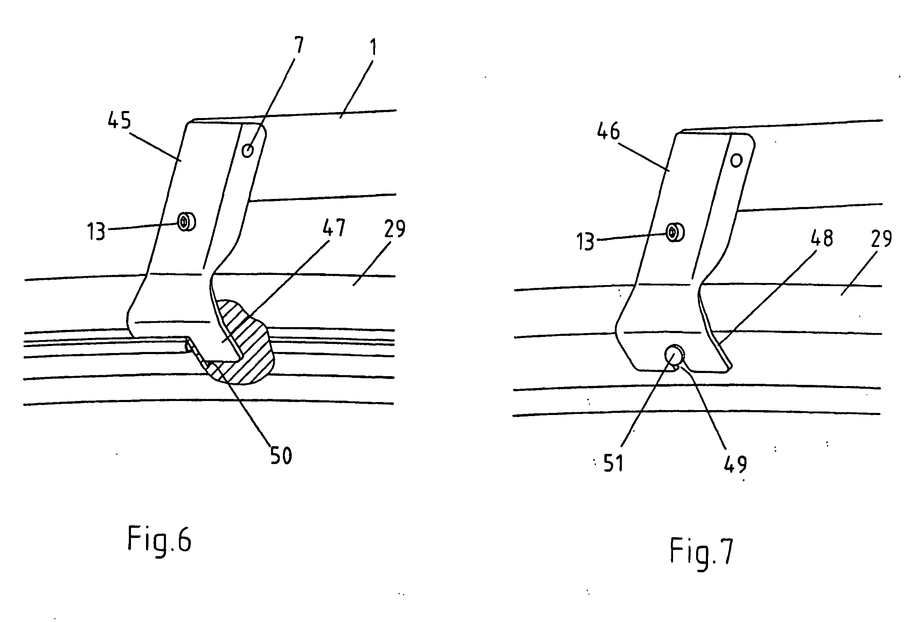

In den Figuren 5a bis 5d sind verschiedene Anordnungen des Zuggliedes 6 in Bezug auf den Tragholm 1 dargestellt. Bei der Ausgestaltung nach Figur 5a befindet sich das Zugglied 6 innerhalb des Tragholmes, so dass es bei dieser Lage keinerlei Windgeräusche verursachen kann. Eine günstige Ausgestaltung ist auch in Figur 5b dargestellt. Dort ist das Zugglied innerhalb einer Aussparung 52 angeordnet und dieser Aussparung angepasst, so dass das Zugglied bündig mit der Unterkante des Tragholmes abschließt. Auf diese Weise besitzt das Zugglied eine etwas andere Form als bei der Ausführungsform nach Figur 6. Bei der Ausführungsform nach Figur 5c ist das Zugglied strömungsgünstig gestaltet und liegt an der Unterseite des Tragholmes 1 im wesentlichen ohne Spalt oder mit einem sehr geringen Spalt 53 an. In dieser unteren Lage ist das Zugglied zum Teil im Windschatten der vorderen unteren Kante des Tragholmes gelegen und erzeugt in Verbindung mit seiner strömungsgünstigen Formgebung praktisch keine Windgeräusche. Bei der Ausgestaltung nach Figur 5d sind an der Unterseite des Tragholmes Profilvorsprünge 54 ausgebildet, zwischen denen ein Zugglied 6 angeordnet und somit gegen den Fahrtwind geschützt ist.

Bei den Ausführungsformen nach den Figuren 6 und 7 übernehmen die mit 45 und 46 bezeichneten Spannelemente sowohl die Spannfunktion als auch die Tragefunktion, die bei den vorhergehenden Ausführungsformen durch Stützfüße übernommen wurden.

Bei Figur 6 weist das Spannelement 45 im wesentlichen die Form eines halben Hohlprofils auf, das am oberen Ende mittels einer Schwenkachse 7 am Tragholm schwenkbar gelagert ist und an dem unteren Ende eine krallenartige Abbiegung 47 aufweist, die in einen Schlitz 50 im Seitenbereich des Kraftfahrzeugdaches 29 formschlüssig eingreift und somit zusätzlich zu seiner Spannfunktion auch noch die Tragfunktion übernehmen kann.

Bei der Ausführungsform nach Figur 7 liegt im wesentlichen die gleiche Ausgestaltung vor, jedoch ist die untere Abbiegung, die mit 48 bezeichnet ist, mit einem Längsschlitz 49 versehen, mit dem diese krallenartige Abbiegung 48 hinter einen am Dach befestigten Bolzenkopf 51 greift und somit formschlüssig mit dem Kraftfahrzeugdach 29 verbunden ist. Bei beiden Ausführungsformen ist die Spannvorrichtung und das Spannglied nicht dargestellt. Lediglich die Spannschraube 13 ist sichtbar.

## Patentansprüche

1. Dachlastenträger für Kraftfahrzeuge mit mindestens einem Tragholm (1), der mittels zweier das Kraftfahrzeugdach in seinem Randbereich umgreifende Spannelemente (2, 3, 23, 24, 45, 46) spannzangenartig befestigt ist, wobei zumindest ein Spannelement (2, 3, 23, 24, 45, 46) gegenüber dem Tragholm (1) beweglich und durch eine spannende Betätigungsvorrichtung (13, 14) gegen das Kraftfahrzeugdach spannbar ist, wobei die beiden Spannelemente über ein Zugglied (6) miteinander in Wirkverbindung stehen, wobei die Betätigungsvorrichtung (13, 14) einerseits direkt mit dem beweglichen Spannelement (2, 3, 23, 24, 45, 46) und andererseits über ein Hebelgetriebe (9, 10, 21, 22) mit dem Zugglied (6) zusammenwirkt und wobei das Hebelgetriebe (9, 10, 21, 22) einen schwenkbar am Tragholm (1) gelagerten Spannhebel (9, 10, 21, 22) aufweist, an dem das Zugglied (6) mit Abstand zur Schwenkachse (7, 8) des Spannhebels (9, 10, 21, 22) angreift, **dadurch gekennzeichnet, dass** die Betätigungsvorrichtung (13, 14) mit größerem Abstand zur Schwenkachse (7, 8) des Spannhebels als das Zugglied (6) angreift, und dass das Zugglied (6) gegen ein Windgeräusche erzeugendes Umströmen durch den Fahrtwind durch den Tragholm (1) geschützt ist.

2. Dachlastenträger nach einem der Anspruch 1, **dadurch gekennzeichnet, dass** das Spannelement (2, 3, 45, 46) gleichzeitig als Stützfuß für den Tragholm (1) dient.

3. Dachlastenträger nach Anspruch 1, **dadurch gekennzeichnet, dass** der Spannhebel (21, 22) gleichzeitig als Stützfuß für den Tragholm (1) dient.

4. Dachlastenträger nach Anspruch 1, **dadurch gekennzeichnet, dass** das Spannelement (23, 24) an seinem oberen Ende (25, 26) lose am Tragholm (1) anliegt, als Hohlprofil ausgebildet ist und zumindest teilweise den als Stützfuß dienenden Spannhebel (21, 22) aufnimmt.

5. Dachlastenträger nach einem der Ansprüche 1 bis 4, **dadurch gekennzeichnet, dass** das Spannelement (2, 3, 23, 24, 45, 46) an seinem freien unteren Ende eine das seitliche Kraftfahrzeugdach umgreifende Spannkralle (4, 5, 47, 48) aufweist.

6. Dachlastenträger nach Anspruch 2 oder 3, **dadurch gekennzeichnet, dass** am Stützfuß (2, 3, 21, 22) ein Auflagekissen (19, 20) zur Abstützung auf dem Kraftfahrzeugdach angeordnet ist.

7. Dachlastenträger nach Anspruch 1, **dadurch gekennzeichnet, dass** jedes Spannelement (45, 46) zur Aufnahme von Dachlasten formschlüssig (50, 51) mit dem Kraftfahrzeugdach (29) oder daran befestigten Teilen (51) zusammenwirkt.

8. Dachlastenträger nach einem der Ansprüche 1, 2, 5, 6 oder 7, **dadurch gekennzeichnet, dass** die Schwenkachse (7, 8) des Spannelements (2, 3) gleichzeitig als Schwenkachse für den Spannhebel (9, 10) dient, der zumindest teilweise innerhalb des als Hohlprofil ausgebildeten Spannelements (2, 3) aufgenommen ist.

9. Dachlastenträger nach einem der Ansprüche 1 bis 8, **dadurch gekennzeichnet, dass** die Spannvorrichtung als eine Spannschraube (13, 14) ausgebildet ist, die in ein Gewinde des Spannhebels (9, 10, 21, 22) einschraubbar ist und sich mit einem Schraubenkopf am Spannelement (2, 3, 23, 24) abstützt.

10. Dachlastenträger nach einem der Ansprüche 1 bis 9, **dadurch gekennzeichnet, dass** die Ausbildung und Anordnung von Spannelement (4, 5, 23, 24, 45, 46), Spannhebel (9, 10, 21, 22) und Spannvorrichtung (13, 14) an jedem Ende des Tragholms (1) der Ausbildung und Anordnung des Tragholms (1) nach einem der Ansprüche 1 bis 11 entsprechen.

11. Dachlastenträger nach einem der Ansprüche 1 bis 10, **dadurch gekennzeichnet, dass** das Zugglied (6) am Tragholm (1) blockierbar (15, 16; 18) ist.

12. Dachlastenträger nach einem der Ansprüche 1 bis 10, **dadurch gekennzeichnet, dass** das Zugglied (6) innerhalb des als Hohlprofil ausgebildeten Tragholms (1) angeordnet ist.

13. Dachlastenträger nach einem der Ansprüche 1 bis 11, **dadurch gekennzeichnet, dass** das Zugglied (6) in einer Aussparung (52) des Tragholms (1) aufgenommen ist.

14. Dachlastenträger nach einem der Ansprüche 1 bis 10, **dadurch gekennzeichnet, dass** das Zugglied (6) gegen den Fahrtwind durch Profilvorsprünge (54) des Tragholms (1) geschützt ist.

15. Dachlastenträger nach einem der Ansprüche 1 bis 10, **dadurch gekennzeichnet, dass** das Zugglied (6) an der Außenseite des Tragholms (1) in einer gegen den Fahrtwind zumindest teilweise geschützten Lage angeordnet ist.

16. Dachlastenträger nach Anspruch 14 oder 15, **dadurch gekennzeichnet, dass** das Zugglied (6) eine strömungsgünstige Form aufweist.

## Claims

1. Roof carrier for motor vehicles having at least one carrier spar (1), which is fixed by means of two gripper-like clamping elements (2, 3, 23, 24, 45, 46) gripping the motor vehicle roof in its edge area, at least one clamping element (2, 3, 23, 24, 45, 46) being moveable in relation to the carrier spar (1) and being capable of being clamped against the motor vehicle roof by a clamp actuating device (13, 14), the two clamping elements being operatively connected to one another by way of a tensile member (6), the actuating device (13, 14) interacting directly with the moveable clamping element (2, 3, 23, 24, 45, 46) on the one hand and, by way of a lever mechanism (9, 10, 21, 22), with the tensile member (6) on the other, and the lever mechanism (9, 10, 21, 22) having a clamping lever (9, 10, 21, 22) which is pivotally supported on the carrier spar (1) and on which the tensile member (6) acts at a distance from the pivoting axis (7, 8) of the clamping lever (9, 10, 21, 22), **characterized in that** the actuating device (13, 14) acts at a greater distance from the pivoting axis (7, 8) of the clamping lever than the tensile member (6), and that the tensile member (6) is protected by the carrier spar (1) to prevent the air stream flowing around it and causing wind noises.

2. Roof carrier according to Claim 1, **characterized in that** the clamping element (2, 3, 45, 46) simultaneously serves as support foot for the carrier spar (1).

3. Roof carrier according to Claim 1, **characterized in that** the clamping lever (21, 22) simultaneously serves as support foot for the carrier spar (1).

4. Roof carrier according to Claim 1, **characterized in that** the clamping element (23, 24), at its upper end (25, 26), bears loosely on the carrier spar (1), is designed as a hollow profile and at least partially accommodates the clamping lever (21, 22) serving as support foot.

5. Roof carrier according to any one of Claims 1 to 4, **characterized in that** the clamping element (2, 3, 23, 24, 45, 46) at its free, lower end has a clamping claw (4, 5, 47, 48) gripping the side of the motor vehicle roof.

6. Roof carrier according to Claim 2 or 3, **characterized in that** a seating cushion (19, 20) is arranged on the support foot (2, 3, 21, 22) for supporting on the motor vehicle roof.

7. Roof carrier according to Claim 1, **characterized in that** each clamping element (45, 46) positively interlocks (50, 51) with the motor vehicle roof (29) or parts (51) fixed thereto in order to absorb roof loads.

8. Roof carrier according to any one of Claims 1, 2, 5, 6 or 7, **characterized in that** the pivoting axis (7, 8) of the clamping element (2, 3) simultaneously serves as pivoting axis for the clamping lever (9, 10), which is at least partially accommodated inside the clamping element (2, 3) designed as hollow profile.

9. Roof carrier according to any one of Claims 1 to 8, **characterized in that** the clamping device is designed as a clamping bolt (13, 14), which can be screwed into a thread of the clamping lever (9, 10, 21, 22) and which rests with a bolt head against the clamping element (2, 3, 23, 24).

10. Roof carrier according to any one of Claims 1 to 9, **characterized in that** the design and arrangement of the clamping element (4, 5, 23, 24, 45, 46), clamping lever (9, 10, 21, 22) and clamping device (13, 14) at each end of the carrier spar (1) correspond to the design and arrangement of the carrier spar (1) according to any one of Claims 1 to 11.

11. Roof carrier according to any one of Claims 1 to 10, **characterized in that** the tensile member (6) on the carrier spar (1) is lockable (15, 16; 18).

12. Roof carrier according to any one of Claims 1 to 10, **characterized in that** the tensile member (6) is arranged inside the carrier spar (1) designed as a hollow profile.

13. Roof carrier according to any one of Claims 1 to 11, **characterized in that** the tensile member (6) is accommodated in a recess (52) of the carrier spar (1).

14. Roof carrier according to any one of Claims 1 to 10, **characterized in that** the tensile member (6) is protected from the air stream by profile projections (54) of the carrier spar (1).

15. Roof carrier according to any one of Claims 1 to 10, **characterized in that** the tensile member (6) is arranged on the outside of the carrier spar (1) and in a position at least partially protected from the air stream.

16. Roof carrier according to Claim 14 or 15, **characterized in that** the tensile member (6) has an aerodynamic shape.

## Revendications

1. Galerie pour véhicules automobiles comprenant au moins un longeron de support (1) qui est fixé comme par des mâchoires de serrage au moyen de deux éléments de serrage (2, 3, 23, 24, 45, 46) venant en prise avec le toit du véhicule automobile dans sa région de bord, au moins un élément de serrage (2, 3, 23, 24, 45, 46) étant mobile par rapport au longeron de support (1) et pouvant être serré contre le toit du véhicule automobile par un dispositif d'actionnement de serrage (13, 14), les deux éléments de serrage étant en liaison coopérante l'un avec l'autre par le biais d'un organe de traction (6), l'organe d'actionnement (13, 14) coopérant d'une part directement avec l'élément de serrage mobile (2, 3, 23, 24, 45, 46) et d'autre part par le biais d'un mécanisme à leviers (9, 10, 21, 22) avec l'organe de traction (6), et le mécanisme à leviers (9, 10, 21, 22) présentant un levier de serrage (9, 10, 21, 22) monté à pivotement sur le longeron de support (1), sur lequel l'organe de traction (6) vient en prise à distance de l'axe de pivotement (7, 8) du levier de serrage (9, 10, 21, 22), **caractérisée en ce que** le dispositif d'actionnement (13, 14) vient en prise avec une plus grande distance à l'axe de pivotement (7, 8) du levier de serrage que l'organe de traction (6), et **en ce que** l'organe de traction (6) est protégé par le longeron de support (1) contre un écoulement périphérique dû au vent relatif, provoquant des bruits de vent.

2. Galerie selon la revendication 1, **caractérisée en ce que** l'élément de serrage (2, 3, 45, 46) sert en même temps de pied de support pour le longeron de support (1).

3. Galerie selon la revendication 1, **caractérisée en ce que** le levier de serrage (21, 22) sert en même temps de pied de support pour le longeron de support (1).

4. Galerie selon la revendication 1, **caractérisée en ce que** l'élément de serrage (23, 24) s'applique à son extrémité supérieure (25, 26) lâchement contre le longeron de support (1), est réalisé sous forme de profilé creux et reçoit au moins partiellement le levier de serrage (21, 22) servant de pied de support.

5. Galerie selon l'une quelconque des revendications 1 à 4, **caractérisée en ce que** l'élément de serrage (2, 3, 23, 24, 45, 46) présente à son extrémité libre inférieure une griffe de serrage (4, 5, 47, 48) venant en prise autour de la partie latérale du toit du véhicule automobile.

6. Galerie selon la revendication 2 ou 3, **caractérisée en ce qu'**un coussin d'appui (19, 20) destiné à s'appuyer sur le toit du véhicule automobile est disposé sur le pied de support (2, 3, 21, 22).

7. Galerie selon la revendication 1, **caractérisée en ce que** chaque élément de serrage (45, 46) coopère par engagement positif (50, 51) avec le toit du véhicule automobile (29) ou des pièces (51) fixées dessus pour recevoir les charges du toit.

8. Galerie selon l'une quelconque des revendications 1, 2, 5, 6 ou 7, **caractérisée en ce que** l'axe de pivotement (7, 8) de l'élément de serrage (2, 3) sert en même temps d'axe de pivotement pour le levier de serrage (9, 10) qui est au moins partiellement reçu dans l'élément de serrage (2, 3) réalisé sous forme de profilé creux.

9. Galerie selon l'une quelconque des revendications 1 à 8, **caractérisée en ce que** le dispositif de serrage est réalisé sous forme de vis de serrage (13, 14) qui peut être vissée dans un filetage du levier de serrage (9, 10, 21, 22) et qui s'appuie avec une tête de vis sur l'élément de serrage (2, 3, 23, 24).

10. Galerie selon l'une quelconque des revendications 1 à 9, **caractérisée en ce que** la réalisation et l'agencement de l'élément de serrage (4, 5, 23, 24, 45, 46), du levier de serrage (9, 10, 21, 22) et du dispositif de serrage (13, 14) à chaque extrémité du longeron de support (1) correspondent à la réalisation et à l'agencement du longeron de support (1) selon l'une quelconque des revendications 1 à 11.

11. Galerie selon l'une quelconque des revendications 1 à 10, **caractérisée en ce que** l'organe de traction (6) peut être bloqué (15, 16 ; 18) sur le longeron de support (1).

12. Galerie selon l'une quelconque des revendications 1 à 10, **caractérisée en ce que** l'organe de traction (6) est disposé à l'intérieur du longeron de support (1) réalisé sous forme de profilé creux.

13. Galerie selon l'une quelconque des revendications 1 à 11, **caractérisée en ce que** l'organe de traction (6) est reçu dans un évidement (52) du longeron de support (1).

14. Galerie selon l'une quelconque des revendications 1 à 10, **caractérisée en ce que** l'organe de traction (6) est protégé contre le vent relatif par des saillies profilées (54) du longeron de support (1).

15. Galerie selon l'une quelconque des revendications 1 à 10, **caractérisée en ce que** l'organe de traction (6) est disposé du côté extérieur du longeron de support (1) dans une position protégé au moins partiellement contre le vent relatif.

16. Galerie selon la revendication 14 ou 15, **caractérisée en ce que** l'organe de traction (6) présente une forme aérodynamique.
